# EUROPEAN PATENT SPECIFICATION

(11) **EP 0 477 803 B1**
(45) Date of publication and mention of the grant of the patent: **28.12.1994**
(21) Application number: 91116073.7
(22) Date of filing: 20.09.1991
(51) Int. Cl.: B60S 1/34

(54) **A pantographic windscreen wiper for motor vehicles**
Scherenförmiger Scheibenwischer für Kraftfahrzeuge
Essuie-glace à pantographe pour véhicules à moteur

(30) Priority: 24.09.1990 IT 5325590 U
(43) Date of publication of application: 01.04.1992
(73) Proprietor: CHAMPION SPARK PLUG DIVISIONE COMPONENTISTICA AUTO DELLA COOPER INDUSTRIES ITALIA S.p.a., 10040 Druento (Torino) (IT)
(72) Inventor: Scorsiroli, Marcello, I-10137 Torino (IT)
(74) Representative: Bosotti, Luciano

(56) References cited:
- WO-A-88/04247
- GB-A- 1 234 040
- GB-A- 2 142 223
- US-A- 2 811 736
- US-A- 4 240 177

## Description

The present invention relates to a pantographic windscreen-wiper for motor vehicles of the type described in the preamble of Claim 1, which is known from figures 9 to 15 of GB-A-2,142,223.

This document shows a windshield-wiper system with a pantographic arm, provided with a connector which permits rotatable movement of a wiper blade about two axes extending substantially perpendicular to each other. The connector has snap engagement means to axially retain two pins carried by a main and a secondary pivoting arm.

The object of the present invention is to provide an improved pantographic windscreen-wiper with a connector which has no projections outside the lateral flanks of the blade, which is simple to mount and which allows a relatively rigid connection of the wiper blade to the arm.

This object is achieved by a windscreen-wiper according to Claim 1.

By virtue of this characteristic, the windscreen-wiper according to the invention is easier and cheaper to manufacture. It constitutes less of a frontal obstruction, affording a better view in use.

According to a development in line with the invention, the fixed shaft has a spherical head and the first end of the secondary arm has a spherical recess in which the spherical head is snap-engaged.

This enables very easy assembly and very convenient replacement without the need to disconnect articulated members. The simplified structure also generates less friction in the moving members, resulting in quieter operation.

Further developments in line with the invention are referred to in the dependent claims.

The invention is explained in detail below with reference to the appended drawings, provided purely by way of non-limiting example, in which:
Figure 1 shows, in plan, a pantographic windscreen wiper in two extreme operating positions.
Figure 2 is a partially-sectioned elevational view of the windscreen wiper,
Figure 3 is a view from below, taken on the arrow III of Figure 2, and
Figure 4 is a variant of Figure 3.

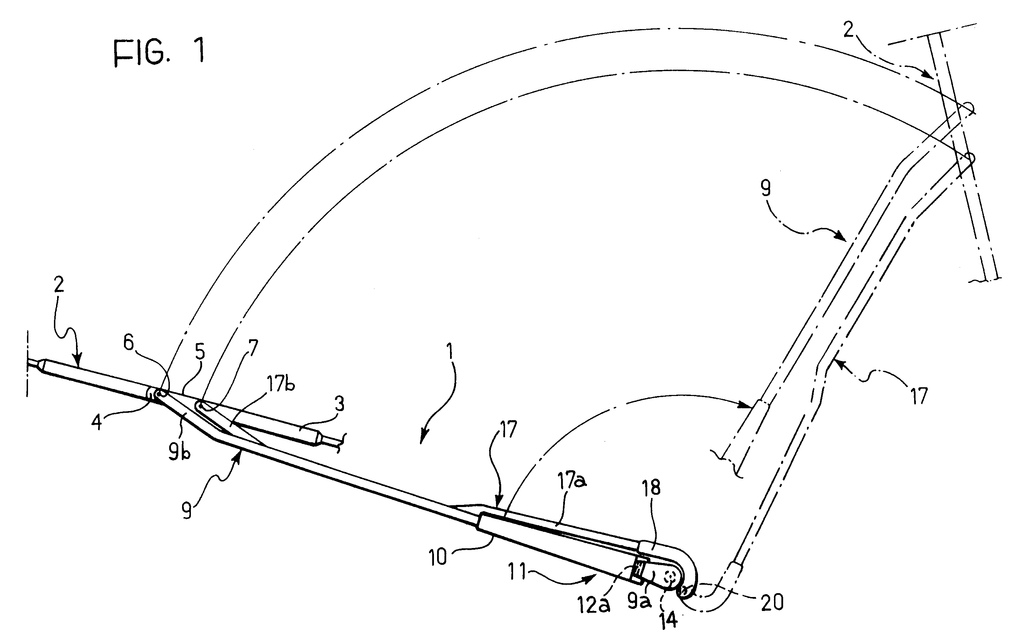

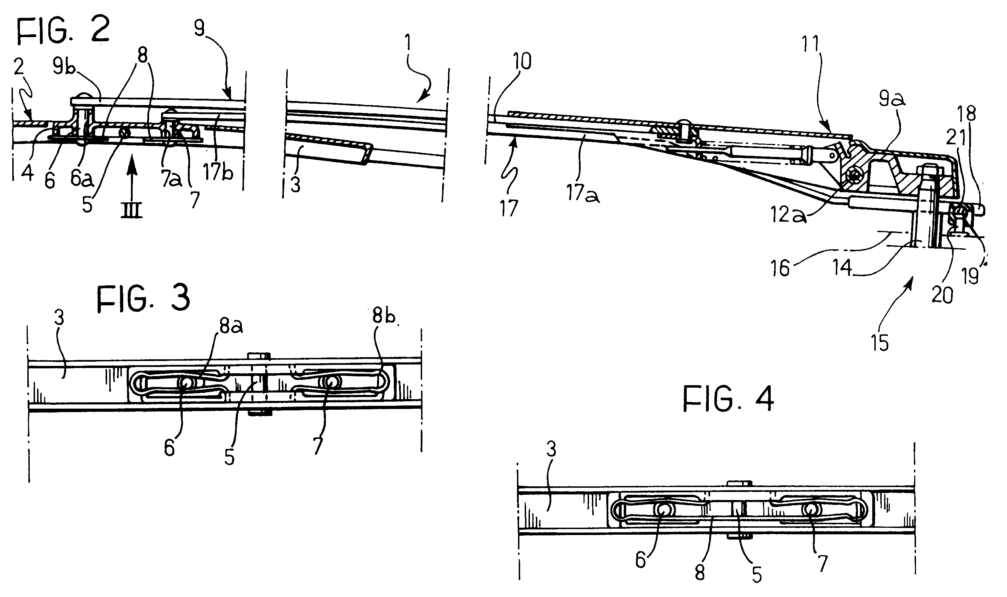

With reference to Figures 1 and 2, a pantographic windscreen wiper includes a blade 2 comprising a structure 3 which carries a rubber blade (not shown) for wiping the windscreen. The blade 2 is connected to a system of articulated arms by a connector element 4 connected to its back by a fixing pin 5 disposed transverse the blade 2 and having two bushes 6a and 7a perpendicular to the fixing pin 5. The two bushes 6a, 7a are aligned with each other longitudinally of the blade 2 and are engaged by respective pins 6 and 7 carried by a primary pivoting arm 9 and a secondary pivoting arm 17 respectively. The pins 6 and 7 are retained in the connector element 4 by snap-retaining members which will be described in detail below.

One end 9b of the pivoting arm 9 is articulated to the blade 2 about the pin 6 and its other end 9a is connected to a motor-driven shaft 14 which projects from a housing 16 of drive means 15 of known type and transmits a reciprocating rotary motion imparted thereby. The end 9a of the main arm 9 includes a joint 12a and a toggle device 11 which keeps the blade 2 in contact with the surface of the windscreen to be wiped, in conventional manner.

The secondary arm 17 is constituted essentially by a metal rod of rectangular cross-section and has one end 17b articulated to the blade 2 by the pin 7 whilst its other end 17a, constituted by a plastics fixing appendage 18, is moulded onto the secondary arm 17. The appendage 18 is arcuate so that it partially surrounds the end 9a of the arm 9 and has a spherical recess 19 which is engaged on a corresponding spherical head 21 of a fixed shaft 20 located below the motor-driven shaft 14 and parallel thereto. The fixed shaft 20 is normally fixed to the housing 16 of the drive means 15.

Figures 3 and 4 show two different embodiments of the snap-retaining members which hold the pins 6 and 7 on the connecting element 4.

In Figure 3 it can be seen that the retaining means may be constituted by two separate wire springs 8a and 8b, whilst Figure 4 provides for the use of a single wire spring 8 which simultaneously clamps both the pin 6 and the pin 7.

In use, in order to remove the blade 2 from the pivoting arms 9 and 17 for possible replacement, it suffices to lift the arms 9 and 17 from the windscreen so that the former pivots about the articulation 12a and the spherical recess 19 of the latter is rotated on the spherical head 21 without the need for the arm 17 to be disengaged from the fixed shaft 20, and then to release the pins 6 and 7 from the connector element 4 by the removal of the retaining members 8 or 8a, 8b.

Naturally, the forms of embodiment and details of construction may be varied widely without thereby departing from the scope of the present invention as defined in the claims.

## Claims

1. A pantographic windscreen-wiper for motor vehicles, comprising:
- a windscreen-wiper blade (2),
- a main pivoting arm (9) having a first end (9a) connected to and fast for rotation with a motor-driven shaft (14), whose position on the vehicle is fixed and a second end (9b) articulated to the blade (2) about a first pin (6),
- a secondary pivoting arm (17) with a first end (17a) connected rotatably to a shaft (20) adjacent and parallel to the motor-driven shaft (14) and a second end (17b) articulated to the blade (2) about a second pin (7) adjacent the first pin (6),
- a connector element (4) having two cylindrical bushes (6a, 7a) engaged by said pins (6, 7), the connector element being articulated to the windscreen-wiper blade about an axis (5) disposed transversally to the blade (2), and
- snap engagement means (8; 8a, 8b) for retaining axially the pins (6, 7) to the respective bushes (6a, 7a), characterised in that:
- said shaft (20), on which the secondary pivoting arm (17) is connected, is fixed,
- said first and second pins (6, 7) are aligned along the windscreen-wiper blade and are disposed symmetrically with respect to said transverse axis (5), and in that
- said snap engagement means comprise at least one wire spring exerting a resilient retaining force on end portions of the pins (6, 7) which project outside respective ends of said seats (6a, 7a).

2. A windscreen wiper according to Claim 1, characterised in that the fixed shaft (20) has a spherical head (21) and the first end (17a) of the secondary arm (17) has a spherical recess (19) in which the spherical head (21) is snap-engaged.

3. A windscreen wiper according to Claim 2, characterised in that the fixed shaft (20) is located below the motor-driven shaft (14) and in that the first end (17a) of the secondary arm (17) has an appendage (18) which extends beneath the first end (9a) of the main arm (9) for fixing to the fixed shaft (20).

4. A windscreen wiper according to Claim 3 , characterised in that the fixing appendage (18) of the secondary arm (17) is arcuate.

5. A windscreen wiper according to Claim 4, characterised in that the secondary arm (17) is of metal and the fixing appendage (18) with the spherical recess (19) is constituted by a plastics body moulded onto the secondary arm (17).

6. A windscreen wiper according to Claim 1, characterised in that the resilient retaining means (8) are constituted by two wire springs (8a and 8b).

7. A windscreen wiper according to Claim 1, characterised in that the resilient retaining means (8) are constituted by a single wire spring (8).

## Patentansprüche

1. Scherenförmiger Scheibenwischer für Kraftfahrzeuge, der umfaßt:
- ein Scheibenwischerblatt (2),
- einen Hauptschwenkarm (9) mit einem ersten Ende (9a), das mit einer motorgetriebenen Welle (14), deren Position an dem Fahrzeug stationär ist, verbunden, und mit selbiger drehbar fest angebracht ist, sowie einem zweiten Ende (9b), das um einen ersten Bolzen (6) herum gelenkig an dem Blatt (2) angebracht ist,
- einen Sekundärschwenkarm (17) mit einem ersten Ende (17a), das drehbar mit einer Welle (20) verbunden ist, die neben und parallel zu der motorgetriebenen Welle 14 angeordnet ist, sowie einem zweiten Ende (17b), das um einen zweiten Bolzen (7) herum benachbart zum ersten Bolzen (6) gelenkig an dem Blatt (2) angebracht ist;
- ein Verbindungselement (4) mit zwei zylindrischen Buchsen (6a, 7a), die mit den Bolzen (6, 7) in Eingriff sind, wobei das Verbindungselement um eine Achse (5) herum, die quer zu dem Blatt (2) angeordnet ist, gelenkig an dem Scheibenwischerblatt angebracht ist, und
- Einschnapp-Eingriffseinrichtungen (8; 8a, 8b), die die Bolzen (6, 7) axial an den entsprechenden Buchsen (6a, 7a) halten,
**dadurch gekennzeichnet**, daß:
- die Welle (20), an der der Sekundärschwenkarm (17) angebracht ist, stationär ist,
- der erste und der zweite Bolzen (6, 7) entlang des Scheibenwischerblattes fluchtend sind und in bezug auf die Querachse (5) symmetrisch angeordnet sind,
und dadurch, daß
- die Einschnapp-Eingriffseinrichtungen wenigstens eine Drahtfeder umfassen, die eine federnde Haltekraft auf Endabschnitte der Bolzen (6, 7) ausübt, die außerhalb entsprechender Enden der Aufnahmen (6a, 7a) vorstehen.

2. Scheibenwischer nach Anspruch 1, **dadurch gekennzeichnet**, daß die stationäre Welle (20) einen kugelförmigen Kopf (21) hat, und das erste Ende (17a) des Sekundärarms (17) eine kugelförmige Vertiefung (19) hat, in die der kugelförmige Kopf (21) einschnappend eingreift.

3. Scheibenwischer nach Anspruch 2, **dadurch gekennzeichnet**, daß die stationäre Welle (20) unterhalb der motorgetriebenen Welle (14) angeordnet ist, und dadurch, daß das erste Ende (17a) des Sekundärarms (17) eine Verlängerung (18) aufweist, die unterhalb des ersten Endes (9a) des Hauptarms (9) verläuft und der Befestigung an der stationären Welle (20) dient.

4. Scheibenwischer nach Anspruch 3, **dadurch gekennzeichnet**, daß die Befestigungsverlängerung (18) des zweiten Arms (17) bogenförmig ist.

5. Scheibenwischer nach Anspruch 4, **dadurch gekennzeichnet**, daß der Sekundärarm (17) aus Metall besteht, und die Befestigungsverlängerung (18) mit der kugelförmigen Vertiefung (19) durch einen Kunststoffkörper gebildet wird, der auf den Sekundärarm (17) aufgeformt ist.

6. Scheibenwischer nach Anspruch 1, **dadurch gekennzeichnet**, daß die federnde Halteeinrichtung (8) durch zwei Drahtfedern (8a und 8b) gebildet wird.

7. Scheibenwischer nach Anspruch 1, **dadurch gekennzeichnet**, daß die federnde Halteeinrichtung (8) durch eine einzelne Drahtfeder (8) gebildet wird.

## Revendications

1. Essuie-glace à pantographe pour véhicules automobiles comprenant:
- un balai d'essuie-glace (2),
- un bras pivotant principal (9) possédant une première extrémité (9a) reliée à un axe d'entraînement (14) et bloquée en rotation avec celui-ci dont la position sur le véhicule est fixe et une deuxième extrémité (9b) articulée au balai (2) par une première goupille (6),
- un deuxième bras pivotant (17) possédant une première extrémité (17a) reliée de manière tournante à un axe (20) adjacent et parallèle à l'axe d'entraînement (14) et une deuxième extrémité (17b) articulée au balai (2) par une deuxième goupille (7) proche de la première goupille (6),
- un élément de liaison (4) comportant deux manchons cylindriques (6a,7a) pouvant recevoir lesdites goupilles (6,7), l'élément de liaison étant articulé au balai d'essuie-glace par un axe (5) disposé transversalement au balai (2), et
- des moyens d'enclenchement rapide (8;8a,8b) pour maintenir de manière axiale les goupilles (6,7) dans les manchons respectifs (6a,6b), caractérisé en ce que:
- ledit axe (20), sur lequel est relié le deuxième bras pivotant (17), est fixe,
- lesdites première et deuxième goupilles (6,7) sont alignées le long du balai d'essuie-glace et sont disposées de manière symétrique par rapport audit axe transversal (5),
et en ce que
- lesdits moyens d'enclenchement rapide comprennent au moins un ressort en fil d'acier exerçant une force de maintien élastique sur les extrémités des goupilles (6,7) qui dépassent des extrémités respectives desdits manchons (6a,7a).

2. Essuie-glace selon la revendication 1, caractérisé en ce que l'axe fixe (20) possède une tête sphérique (21) et la première extrémité (17a) du deuxième bras (17) comporte une cavité sphérique (19) dans laquelle s'enclenche rapidement la tête sphérique (21).

3. Essuie-glace selon la revendication 2, caractérisé en ce que l'axe fixe (20) est situé sous l'axe d'entraînement (14) et en ce que la première extrémité (17a) du deuxième bras (17) comporte un appendice (18) qui s'étend au-dessous de la première extrémité (9a) du bras principal (9) pour venir se fixer sur l'axe fixe (20).

4. Essuie-glace selon la revendication 3, caractérisé en ce que l'appendice de fixation (18) du deuxième bras (17) est arqué.

5. Essuie-glace selon la revendication 4, caractérisé en ce que le deuxième bras (17) est en métal et l'appendice de fixation (18) avec la cavité sphérique (19) est constitué d'un corps en plastique moulé sur le deuxième bras (17).

6. Essuie-glace selon la revendication 1, caractérisé en ce que les moyens de maintien élastique (8) comprennent deux ressorts en fil d'acier (8a et 8b).

7. Essuie-glace selon la revendication 1, caractérisé en ce que les moyens de maintien élastique (8) comprennent un seul ressort en fil d'acier (8).
